# EUROPÄISCHE PATENTSCHRIFT

(11) **EP 4 494 123 B1**
(45) Veröffentlichungstag und Bekanntmachung des Hinweises auf die Patenterteilung: **23.07.2025**
(21) Anmeldenummer: 24709681.1
(22) Anmeldetag: 04.03.2024
(51) Int. Cl.: G08G 1/0962, G06V 20/58, G08G 1/0965, G08G 1/16, G02B 27/01

(54) **BREMSLICHT-ANZEIGE VERDECKTER VERKEHRSTEILNEHMER IN AUGMENTIERTER REALITÄT**
BRAKE-LIGHT DISPLAY OF HIDDEN ROAD USERS IN AUGMENTED REALITY
AFFICHAGE DE FEUX DE FREINAGE D'USAGERS DE LA ROUTE CACHÉS EN RÉALITÉ AUGMENTÉE

(30) Priorität: 05.06.2023 DE 102023002285
(43) Veröffentlichungstag der Anmeldung: 22.01.2025
(73) Patentinhaber: Mercedes-Benz Group AG, 70372 Stuttgart (DE)
(72) Erfinder: ENGEL, Michael, 70374 Stuttgart (DE)
(74) Vertreter: Novagraaf Group
(86) Internationale Anmeldenummer: PCT/EP2024/055607
(87) Internationale Veröffentlichungsnummer: WO 2024/251398

(56) Entgegenhaltungen:
- DE-A1- 102006 019 495
- DE-A1- 102006 055 344
- DE-A1- 102017 223 575
- US-A1- 2019 095 729

## Beschreibung

Die Erfindung betrifft ein Verfahren zum Anzeigen von Informationen für einen Fahrer eines hinteren Fahrzeugs über eine Bremsung eines weiteren Verkehrsteilnehmers vorderhalb eines unmittelbar vor dem hinteren Fahrzeug vorausfahrenden Fahrzeugs.

Im öffentlichen Straßenverkehr tritt bisweilen die Situation auf, dass von einem Fahrer eines Fahrzeugs weitere Verkehrsteilnehmer nicht oder zu spät erkannt werden, da diese von einem Objekt oder einem weiteren Verkehrsteilnehmer verdeckt werden. Vorausschauendes Fahren ist damit ebenfalls erschwert, da nicht der vollständige übrige Verkehr einsehbar ist. Ein solches Verdeckungsproblem kann insbesondere dann auftreten, wenn das eigene Fahrzeug wie ein Personenkraftwagen hinter einem deutlich größeren Fahrzeug wie einem Lastkraftwagen hinterher fährt, aber auch beispielsweise wenn ein Kleinwagen hinter einem für Städte konzipierten Geländewagen oder einem Kleintransporter hinterher fährt. Einerseits werden Stadt-Geländewägen für Konsumenten laufend beliebter, andererseits gibt es die Tendenz, kleine und aerodynamisch optimierte elektrische Fahrzeuge zu verwenden, die eher schmal und/oder flach ausfallen. Auch bei Einhaltung eines ausreichend großen Abstands zum vorausfahrenden Fahrzeug können dabei vorausfahrende weitere Verkehrsteilnehmer verdeckt werden. Eine solche Situation erfordert erhöhte Aufmerksamkeit des Fahrers des nachfahrenden Fahrzeugs.

Die EP 3 399 330 A1 betrifft zur Lösung dieses Verdeckungs-Problems ein Objekterkennungssystem für ein automatisiertes Fahrzeug, das Folgendes umfasst: Einen Objektdetektor, der detektierbare Objekte in der Nähe des eigenen Fahrzeugs detektiert; einen Empfänger, der einen Hinweis auf eine Objektpräsenz von anderen Sendern in der Nähe des eigenen Fahrzeugs empfängt; und eine Steuerung in Verbindung mit dem Objektdetektor und dem Empfänger, wobei die Steuerung konfiguriert ist, um das eigene Fahrzeug zu betreiben, um eine Kollision mit einem verborgenen Objekt zu vermeiden, wenn das verborgene Objekt vom Objektdetektor nicht erkannt wird und das Vorhandensein des Objekts durch mindestens zwei Instanzen der anderen Sender angezeigt wird.

Aufgabe der Erfindung ist es, eine potentielle Gefahr für ein hinteres Fahrzeug zu vermindern, wenn ein weiterer Verkehrsteilnehmer durch ein vor dem hinteren Fahrzeug vorausfahrendes Fahrzeug verdeckt wird oder verdeckt werden kann.

Die DE 102006019495 A1 betrifft eine Einrichtung zum Aussenden eines Warnsignals in Abhängigkeit von einem auf ein Fremdfahrzeug bezogenes Zustandssignal. Die Einrichtung weist einen Signalempfänger zum Empfangen des Zustandssignals und zum Bereitstellen eines dem Zustandssignal entsprechenden Ausgangssignals auf. Weiterhin weist die Einrichtung eine Verarbeitungseinrichtung für das Verarbeiten des vom Signalempfänger bereitgestellten Ausgangssignals auf sowie einen Signalgeber zum Aussenden eines Warnsignals auf der Grundlage des von der Verarbeitungseinrichtung verarbeiteten Ausgangssignals.

Die DE 102017216215 A1 betrifft ein Verfahren zum Anzeigen von Bremsvorgängen vorausfahrender Fahrzeuge in einem Fahrzeug. Bei dem erfindungsgemäßen Verfahren werden die vorausfahrenden Fahrzeuge erfasst. Es werden Daten zur Beschleunigung der vorausfahrenden Fahrzeuge erfasst. Weiterhin werden aus den Daten zur Beschleunigung erste voraus fahrende Fahrzeuge mit einer ersten Beschleunigung ermittelt, wobei die erste Beschleunigung eine negative Beschleunigung ist, deren Betrag größer oder gleich einem festgelegten Schwellwert ist. Zudem werden auf einer Anzeigefläche erste graphische Objekte erzeugt, wobei jedem ersten vorausfahrenden Fahrzeug ein erstes graphisches Objekt zugeordnet wird, welches anzeigt, dass das dem ersten graphischen Objekt zugeordnete erste vorausfahrende Fahrzeug die erste Beschleunigung aufweist. Die Erfindung betrifft ferner eine Vorrichtung zum Anzeigen von Beschleunigungen vorausfahrender Fahrzeuge in einem Fahrzeug.

Die DE 102013217436 A1 betrifft ein Fahrerassistenzsystem in einem Ego-Fahrzeug weist insbesondere ein elektronisches Steuergerät zum Erkennen eines Abbiegemanövers auf, das Mittel zum Empfangen von Car-to-Car-Informationssignalen von anderen Fahrzeugen enthält. Dabei werden definierte Informationen eines empfangenen Car-to-Car-Informationssignals eines Vor-Fahrzeuges bezogen auf dessen mögliches Abbiegemanöver ausgewertet, wobei die definierten Informationen zumindest ein Abbiegewunschsignal enthalten.

Die DE 102011088130 A1 beschreibt ein Verfahren zur Erkennung einer Bremssituation eines sich auf einem Verkehrsweg befindlichen Fahrzeugs, das die folgenden Schritte umfasst: Ermitteln eines Rotanteils zumindest eines Bildbereichs eines Bildes, das zumindest einen Abschnitt des Verkehrswegs abbildet; und Bestimmen der Bremssituation basierend auf dem Rotanteil, und Ermitteln eines weiteren Rotanteils zumindest eines Bildbereichs eines weiteren Bildes, das zumindest einen Abschnitt des Verkehrswegs zu einem anderen Zeitpunkt als das Bild abbildet, und bei dem im Schritt des Bestimmens die Bremssituation basierend auf dem Rotanteil und dem weiteren Rotanteil bestimmt wird.

Die DE 102006055344 A1 betrifft ein Verfahren zur drahtlosen Kommunikation zwischen Fahrzeugen, bei dem: Ein relativ zu einem ersten Fahrzeug befindliches zweites Fahrzeug durch das erste Fahrzeug identifiziert wird; das zweite Fahrzeug drahtlos Fahrinformationen aussendet, welche von dem ersten Fahrzeug empfangen werden, wobei die Fahrinformationen Informationen über die Verkehrssituation in der Umgebung des zweiten Fahrzeugs und/oder über Zustandsgrößen des zweiten Fahrzeugs umfassen; die in dem ersten Fahrzeug empfangenen Fahrinformationen im ersten Fahrzeug verarbeitet werden und die verarbeiteten Fahrinformationen zumindest teilweise über ein Ausgabemittel im ersten Fahrzeug ausgegeben werden.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft ein Verfahren zum Anzeigen von Informationen für einen Fahrer eines hinteren Fahrzeugs über eine Bremsung eines weiteren Verkehrsteilnehmers vorderhalb eines unmittelbar vor dem hinteren Fahrzeug vorausfahrenden Fahrzeugs, aufweisend die Schritte:
- Ermitteln eines Zulassungs-Kennzeichens des vorausfahrenden Fahrzeugs durch das hintere Fahrzeug,
- Abgleich des ermittelten Zulassungs-Kennzeichens des vorausfahrenden Fahrzeugs mit einer zentralen Datenbank auf eine vorab-Registrierung, und wenn eine solche vorab-Registrierung festgestellt wird:
- Senden einer Anfrage zum Erhalt einer absoluten Position des vorausfahrenden Fahrzeugs durch das hintere Fahrzeug; und
- Prüfen nach Erhalt der absoluten Position des vorausfahrenden Fahrzeugs, ob die absolute Position des vorausfahrenden Fahrzeugs und eine absolute Position des hinteren Fahrzeugs innerhalb eines vorgegebenen gemeinsamen Bereichs liegen, und wenn dies als vorliegend festgestellt wird:
- kontinuierliches Übermitteln von Sensorinformationen vom vorausfahrenden Fahrzeug an das hintere Fahrzeug, wobei die Sensorinformationen Daten über die Umgebung vorderhalb des vorausfahrenden Fahrzeugs einschließlich eines in dieser Umgebung befindlichen weiteren Verkehrsteilnehmers und dessen Leuchten umfassen; und
- Analysieren der übermittelten Sensorinformationen auf Aktivierung von Bremsleuchten des weiteren Verkehrsteilnehmers, und wenn diese als aktiviert erkannt werden und vom hinteren Fahrzeug festgestellt wird, dass währenddessen die Bremsleuchten des vorausfahrenden Fahrzeugs nicht aktiviert sind: Anzeigen einer zum vorausfahrenden Fahrzeug ortsfesten Symbolik aktivierter Bremsleuchten für den Fahrer des hinteren Fahrzeugs in augmentierter Realität.

Das vorausfahrende Fahrzeug und das unmittelbar hinter dem vorausfahrenden Fahrzeug befindliche hintere Fahrzeug bilden ein hintereinander fahrendes Paar von Fahrzeugen, wobei das vorausfahrende Fahrzeug das Potenzial hat, weitere Verkehrsteilnehmer vor dem vorausfahrenden Fahrzeug für das hintere Fahrzeug zu verdecken. Dies ist insbesondere dann der Fall, wenn das vorausfahrende Fahrzeug größer und/höher als das hintere Fahrzeug ist. Um die möglicherweise somit vorliegende Verdeckung zu entschärfen, kann ein Prozess vom hinteren Fahrzeug initiiert werden, um an die Informationen einer Sensoreinheit des vorausfahrenden Fahrzeugs zu kommen, welche eine vordere Umgebung einschließlich weiterer Verkehrsteilnehmer vor dem vorausfahrenden Fahrzeug erfasst.

Hierzu findet insbesondere in einem ersten Schritt ein sogenannter "Handshake" statt, um das vorausfahrende Fahrzeug und das hintere Fahrzeug informationstechnisch zu verbinden. Vom hinteren Fahrzeug wird daher zunächst ein Zulassungs-Kennzeichen des vorausfahrenden Fahrzeugs erfasst und ausgewertet und mittels einer zentralen Datenbank eine Auswertung vorgenommen, ob das vorausfahrende Fahrzeug unter seinem Zulassungs-Kennzeichen an einem entsprechenden Programm teilnimmt und sich vorab dafür registriert hat.

Ist dies der Fall, werden die absoluten Positionen, insbesondere satellitengestützt ermittelten Positionen, des vorausfahrenden und des hinteren Fahrzeugs daraufhin überprüft, ob sich diese in unmittelbarer Nähe zueinander befinden, um sicherzustellen, dass nur tatsächlich in der Nähe befindliche (hintere) Fahrzeuge dazu in der Lage sind, eine solche Anfrage zu stellen und die Sensorinformationen des vorausfahrenden Fahrzeugs erhalten zu können. Es findet somit eine Zwei-Faktor-Authentifizierung statt, um das "Pairing" des vorausfahrenden Fahrzeugs und des hinteren Fahrzeugs vervollständigen zu können.

Erst dann, wenn gemäß dem Zulassungs-Kennzeichen das vorausfahrende Fahrzeug an einem entsprechenden Programm partizipiert und das in unmittelbarer Nähe hinter dem vorausfahrenden Fahrzeug fahrende hintere Fahrzeug eine Anfrage stellt, können kontinuierlich Sensorinformationen vom vorausfahrenden Fahrzeug an das hintere Fahrzeug übermittelt werden.

Bevorzugt erfolgt die Übertragung der Sensorinformationen vom vorausfahrenden Fahrzeug an das hintere Fahrzeug mittels einer drahtlosen Übertragung nach dem 5G Standard. Prinzipiell ist eine Übertragung über WLAN oder Bluetooth oder anderen älteren Standards auch möglich, kann jedoch zur Stabilitätsproblemen bei der Übertragung führen oder wegen einer zu hohen Zeitverzögerung unangemessen sein. Weiterhin bevorzugt werden vom vorausfahrenden Fahrzeug an das hintere Fahrzeug komprimierte und/oder präprozessierte Sensorinformationen übertragen.

Die Bremsleuchten des weiteren Verkehrsteilnehmers müssen in ihrer spezifischen Ausgestaltung in den Sensorinformationen erkannt werden. Ziel ist es, ein möglichst genaues 2D-Modell der Bremsleuchten zur Fahrzeugsilhouette zu bestimmen. Da die Fahrzeugsilhouette aufgrund des sich veränderten Abstandes ständig in ihrer Größe verändert, muss in diesem Verhältnis auch das 2D-Abbild der Bremslichter angepasst werden. Hierzu bestehen drei Möglichkeiten: Die statische Erkennung der Bremsleuchten, die Nutzung von 3D-Daten vom Hersteller des weiteren Verkehrsteilnehmers, oder über eine dynamische Erkennung der Bremsleuchten (Bremsleuchten leuchten zum Beispiel einmal auf) nach einer vorab-Registrierung des weiteren Verkehrsteilnehmers.

Durch eine Kamera des vorausfahrenden Verkehrsteilnehmers aufgenommene Bilder können mittels bekannter Bildverarbeitungsverfahren nach roten Objekten abgesucht werden. Der Vorteil dessen ist, dass diese Analyse schnell erfolgt, da hierbei kein initialer Bremsvorgang des weiteren Verkehrsteilnehmers notwendig ist; diese Methode kann jedoch ungenau sein. Alternativ hierzu können mittels einer Kamera des vorausfahrenden Fahrzeugs aufgenommene Bilder nach leuchtenden roten Objekten abgesucht werden. Zum Beispiel können hierzu Sensordaten nach einer Geschwindigkeitsreduzierung des weiteren Verkehrsteilnehmers (zum Beispiel nach Bremseingriff) als Auslöser genommen werden und dann über Differenzbilder die exakte Position und Ausprägung der Bremsleuchten bestimmt werden. Über Verfahren wie den klassischen Strahlensatz kann bzw. muss dieses 2D-Modell entsprechend der Entfernung zum Fahrzeug (bzw. die Fahrzeuggröße) angepasst werden. Der Vorteil hierbei liegt im Erhalten eines sehr genauen Abbilds (2D-Modell) der Bremsleuchten. Nachteilig dagegen ist daran, dass der weitere Verkehrsteilnehmer zumindest einmal Bremsen muss, um die statische Erfassung für ein Modell zu ermöglichen und dieses dann mit der dynamischen Erkennung optimieren zu können.

Weiterhin alternativ kann vorgesehen werden, dass nach einer vorab-Registrierung des weiteren Verkehrsteilnehmers entsprechend Daten übertragen werden. Hierbei kann unter Umständen jedoch nicht sichergestellt werden, dass auch solche Daten vorhanden sind; zweitens müssten die Daten von der zentralen Datenbank schnell an das hintere Fahrzeug übertragen werden. Die vorab-Registrierung zu diesem Zweck kann jedoch entfallen, wenn es zukünftig Standard und/oder Pflicht werden würde, dass jedes am Straßenverkehr teilnehmende Fahrzeug seine Sensordaten (insbesondere anonymisiert) der Allgemeinheit bereitstellen muss. Dieses Vorgehen stellt zumindest die genaueste Methode dar, macht jedoch zumindest eine einmalige Übertragung der Daten an das hintere Fahrzeug notwendig.

Es folgt demnach das Analysieren der übermittelten Sensorinformationen auf Aktivierung von Bremsleuchten des weiteren Verkehrsteilnehmers, bevorzugt in einer Recheneinheit des hinteren Fahrzeugs, alternativ in einer zentralen Recheneinheit wie einem zentralen Server einer Cloud. Wird erkannt, dass die Bremsleuchten des weiteren Verkehrsteilnehmers aktiviert sind, während gleichzeitig die Bremsleuchten des vorausfahrenden Fahrzeugs nicht aktiviert sind, wird eine zum vorausfahrenden Fahrzeug ortsfeste Symbolik aktivierter Bremsleuchten für den Fahrer des hinteren Fahrzeugs in augmentierter Realität angezeigt.

Wird ein generiertes 2D-Gittermodel der Bremslichter verwendet, wird dieses entsprechend der Entfernung zum vorausfahrenden Fahrzeug skaliert. Die Skalierung und Position wird im Größenverhältnis der Außenkontur des vorausfahrenden Fahrzeuges angepasst. Um ein virtuelles Bremslicht exakt auf die Bremslichter des vorausfahrenden Fahrzeugs projizieren zu können, muss im ersten Schritt der weitere Verkehrsteilnehmer permanent erfasst werden und die äußeren Fahrzeugkonturen bestimmt werden, um die Position und Größe der Bremsleuchten entsprechend der aufgenommen Daten bzw. übertragenen 2D-Daten zu skalieren.

Anschließend wird der Skalierungsfaktor der aufgenommenen hinteren 2D-Kontur des vorausfahrenden Fahrzeugs bezogen auf den einmalig aufgenommen Referenzdaten berechnet und entsprechend auch die Position und Größe der Projektionsfläche der Bremsleuchten berechnet. Diese berechneten Zieldaten der Symbolik mit den virtuellen Bremsleuchten werden insbesondere an einen Projektionsalgorithmus übergeben, welcher daraus die notwendigen Verhältnisänderung der Bilddaten zur Projektion erstellt.

Die Symbolik weist im einfachsten Fall rote Balken auf, kann auch zusätzliche bekannte Symbole wie Warndreiecke aufweisen, oder ist der Formgebung und Farbgebung von realen Bremsleuchten nachgebildet, insbesondere genau derjenigen Form und Farbgebung der Bremsleuchten des weiteren Verkehrsteilnehmers, oder wenn eine Überdeckung der Bremsleuchten des vorausfahrenden Fahrzeugs gewünscht wird, dessen Bremsleuchten.

Im letzteren Fall wird die Anzeige der Symbolik der Bremsleuchten kongruent über dem Ort der tatsächlichen Bremsleuchten des vorausfahrenden Fahrzeugs durch das Head-Up-Display vorgenommen, insbesondere über ein Head-Up-Display. Die Projektion der Symbolik erfolgt in jedem Fall dann, wenn das Fahrzeug, welches sich vor dem Vorderfahrzeug befindet, bremst, aber das Vorderfahrzeug (noch) nicht bremst. Somit wird die Sicherheit erhöht und Auffahrunfälle können vermieden werden.

Eine mögliche weitere Anwendung eines solchen Verfahrens liegt auch im Bereich der elektronischen Deichsel, auch genannt "Platooning", bei dem die Gesamteffizienz von mehreren Fahrzeugen dadurch gesteigert wird, dass sie in sehr geringem Abstand hintereinander fahren können, während besondere Mechanismen zur Wahrung der Sicherheit vorgesehen werden, um beispielsweise eine Kettenreaktion von Auffahrunfällen bei einer Notbremsung des vordersten Fahrzeugs zu verhindern.

Gemäß einer vorteilhaften Ausführungsform wird im hinteren Fahrzeug die Symbolik aktivierter Bremsleuchten auf einem Head-Up-Display visuell dargestellt.

Zur korrekten Einspielung der Symbolik an einem Head-up-Display, welche insbesondere aktivierte Bremsleuchten darstellt, wird vorteilhaft durch Eye-Tracking-Methoden die jeweils aktuelle Blickrichtung des Fahrers ermittelt. Liegt der Fokus des Fahrers außerhalb des Head-up-Displays, kann ein Warnton oder eine andere visuelle Warnung ausgegeben werden.

Gemäß einer weiteren vorteilhaften Ausführungsform wird an dem hinteren Fahrzeug eine Warnung ausgegeben, wenn der Fokus des Fahrers außerhalb des Head-Up-Displays liegt.

Gemäß einer weiteren vorteilhaften Ausführungsform wird im hinteren Fahrzeug die Symbolik aktivierter Bremsleuchten ortsfest über Bremsleuchten des vorausfahrenden Fahrzeugs überlagert dargestellt.

Zur exakten Überlagerung ist eine vom Abstand zwischen dem vorausfahrenden Fahrzeug und dem hinteren Fahrzeug sowie an die relative seitliche Position angepasste Projektion der Symbolik auf die Bremsleuchten des vorausfahrenden Fahrzeugs, beispielsweise wie weiter oben erläutert, notwendig. Diese Ausführungsform wird insbesondere dann angewendet, wenn der weitere Verkehrsteilnehmer bremst, was durch das Aufleuchten seiner Bremsleuchten ersichtlich ist und aus den Sensordaten des vorausfahrenden Fahrzeugs auslesbar ist, das vorausfahrende Fahrzeug selbst aber noch nicht bremst, da sonst das (Nicht-)Aufleuchten der Bremsleuchten des vorausfahrenden Fahrzeugs überdeckt werden würde und in einem Fehlerfall somit das korrekte Erkennen der Bremsleuchten des vorausfahrenden Fahrzeugs durch den Fahrer des hinteren Fahrzeugs nicht mehr gewährleistet werden könnte.

Gemäß einer weiteren vorteilhaften Ausführungsform wird im hinteren Fahrzeug die Symbolik aktivierter Bremsleuchten abhängig von relativen Orientierungswinkeln zwischen dem hinteren Fahrzeug und dem vorausfahrenden Fahrzeug räumlich verzerrt dargestellt.

Eine vorgegebene Symbolik wird gemäß dieser Ausführungsform nicht nur abhängig vom Abstand zwischen dem vorausfahrenden und dem hinteren Fahrzeug angepasst, sondern auch abhängig von den relativen Orientierungswinkeln der beiden Fahrzeuge. Zur Anzeige der Symbolik werden daher entsprechende Transformationen durchgeführt, über die Translation und Skalierung abhängig vom Abstand der Fahrzeuge hinausgehend damit auch eine von den Orientierungswinkeln abhängige Rotation der Symbolik sowie eine entsprechende Zerrung/Scherung. Somit können realistisch nachgebildete Bremsleuchten über denen des vorausfahrenden Fahrzeugs überlagert dargestellt werden, als wären diese am vorausfahrenden Fahrzeug angeordnet.

Dabei können auch die realen Formen der Bremsleuchten des weiteren Verkehrsteilnehmers in der Symbolik dargestellt werden, um Form und Ausprägung der Bremsleuchten des weiteren Verkehrsteilnehmers exakt wiederzugeben, und die Generierung eines virtuellen Duplikates der Bremsleuchten des weiteren Verkehrsteilnehmers zu ermöglichen.

Gemäß einer weiteren vorteilhaften Ausführungsform wird im hinteren Fahrzeug die Symbolik aktivierter Bremsleuchten ortsfest zu einer Hinterseite des vorausfahrenden Fahrzeugs, jedoch mit den originalen geometrischen Verhältnissen der Bremsleuchten des vorausfahrenden Fahrzeugs, dargestellt.

Hierbei werden die äußeren Konturen des vorausfahrenden Fahrzeugs als Referenz gewählt, um die Bremsleuchten des weiteren Verkehrsteilnehmers virtuell auf die Konturen des vorausfahrenden Fahrzeugs angepasst an letzterem virtuell darzustellen.

Gemäß einer weiteren vorteilhaften Ausführungsform weist die Symbolik aktivierter Bremsleuchten invariante und vom Typ des weiteren Verkehrsteilnehmers unabhängige Symbole auf. Im einfachsten Fall sind dies beispielsweise rote Rechtecke.

Gemäß einer weiteren vorteilhaften Ausführungsform weist im hinteren Fahrzeug die Symbolik aktivierter Bremsleuchten abhängig vom Typ des weiteren Verkehrsteilnehmers gewählte Symbole auf.

Gemäß einer weiteren vorteilhaften Ausführungsform erhält die zentrale Datenbank die Anfrage zum Erhalt der absoluten Position des vorausfahrenden Fahrzeugs, und prüft bei vorab-Registrierung des vorausfahrenden Fahrzeugs die absolute Position des vorausfahrenden Fahrzeugs und des hinteren Fahrzeugs auf jeweiliges Liegen im vorgegebenen gemeinsamen Bereich relativ zueinander und erteilt im positiven Fall eine Freigabe an das vorausfahrende Fahrzeug, die Sensorinformationen an das hintere Fahrzeug zu übermitteln.

Gemäß einer weiteren vorteilhaften Ausführungsform wird das kontinuierliche Übermitteln von Sensorinformationen vom vorausfahrenden Fahrzeug an das hintere Fahrzeug gestoppt, wenn das hintere Fahrzeug die Spur des vorausfahrenden Fahrzeugs verlässt und/oder sich ein weiteres Fahrzeug zwischen das vorausfahrende Fahrzeug und das hintere Fahrzeug setzt, oder wenn ein Mindestabstand zwischen dem vorausfahrenden Fahrzeug und dem hinteren Fahrzeug überschritten wird, wobei der Mindestabstand insbesondere geschwindigkeitsabhängig gewählt wird.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1:: Ein Verfahren zum Übermitteln von Informationen von einem vorausfahrenden Fahrzeug an ein hinteres Fahrzeug gemäß einem Ausführungsbeispiel der Erfindung.
- Fig. 2:: Eine Verkehrssituation, in der das Verfahren nach Fig. 1 zum Einsatz kommen kann.
- Fig. 3:: Eine Verkehrssituation, in der das Verfahren nach Fig. 1 beendet wird.
- Fig. 4:: Eine Visualisierung, angewendet im Verfahren nach Fig. 1.

Die Darstellungen in den Figuren sind schematisch und nicht maßstäblich.

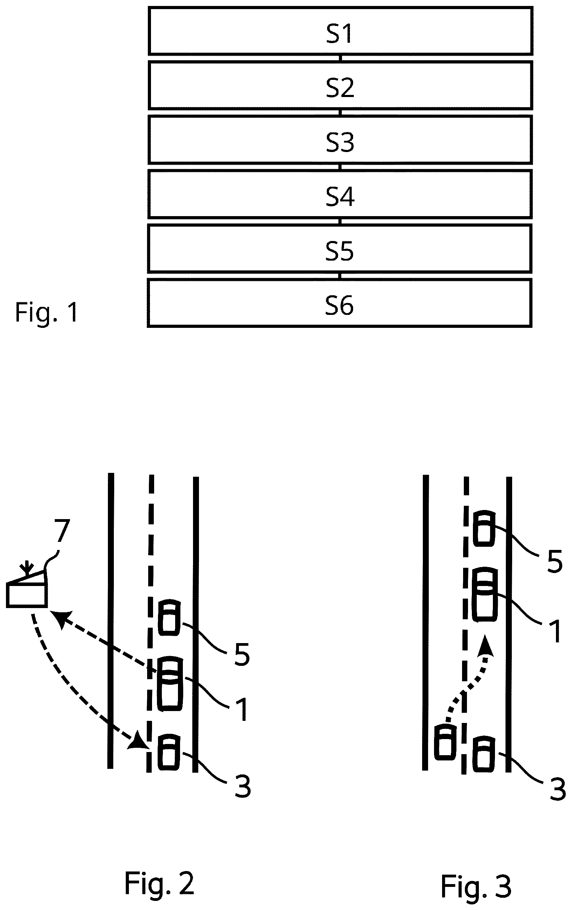

Fig. 1 zeigt ein Verfahren zum Übermitteln von Informationen von einem vorausfahrenden Fahrzeug 1 an ein unmittelbar hinter dem vorausfahrenden Fahrzeug 1 befindliches hinteres Fahrzeug 3 über einen weiteren Verkehrsteilnehmer 5 vor dem vorausfahrenden Fahrzeug 1. Zum Verständnis des Verfahrens kann auch die Fig. 2 herangezogen werden, in der eine entsprechende Verkehrssituation gezeigt ist, wobei insbesondere das vorausfahrende Fahrzeug 1 ein Transporter ist und entsprechende Dimensionen aufweist, die das hinterherfahrende hintere Fahrzeug 3 deutlich übersteigen. Damit kann der Fall eintreten, dass von einem Fahrer des hinteren Fahrzeugs 3 ein weiterer Verkehrsteilnehmer 5, der sich vorderhalb des vorausfahrenden Fahrzeugs 1 befindet, nicht gesehen wird, und beispielsweise bei einer starken Bremsung des weiteren Verkehrsteilnehmers 5 das vorausfahrende Fahrzeug 1 eine Notbremsung durchführen wird. Ist jedoch das hintere Fahrzeug 3 bereits über die Bremsung des weiteren Verkehrsteilnehmers 5 informiert, obwohl dieser vom vorausfahrenden Fahrzeug 1 verdeckt wird, kann auch das hintere Fahrzeug 3 früher eine Bremsung einleiten und somit die Bildung eines Staus durch eine Überreaktion bei der Bremsung verhindert werden, sowie ein Auffahrunfall des hinteren Fahrzeugs 3 auf das vorausfahrende Fahrzeug 1 verhindert werden. Zu diesem Zweck wird in einem ersten Schritt des Verfahrens das Ermitteln S1 eines Zulassungs-Kennzeichens des vorausfahrenden Fahrzeugs 1 durch das hintere Fahrzeug 3 durchgeführt, um einen Abgleich S2 des ermittelten Zulassung-Kennzeichens des vorausfahrenden Fahrzeugs 1 mit einer zentralen Datenbank 7 auf eine vorab-Registrierung auszuführen. Hat sich der vorausfahrende Verkehrsteilnehmer 1 einmalig entsprechend im Voraus registriert, und sein Zulassungs-Kennzeichen ist in der Datenbank 7 mit einem solchen Merkmal abgelegt, sendet S3 das hintere Fahrzeug 3 oder die Datenbank 7 selbst eine Anfrage an das vorausfahrende Fahrzeug 1 zum Erhalt einer WGS-84-Position des vorausfahrenden Fahrzeugs 1. Nun wird geprüft S4, ob die WGS-84-Position des vorausfahrenden Fahrzeugs 1 und eine WGS-84-Position des hinteren Fahrzeugs 3 innerhalb eines vorgegebenen mitbewegten gemeinsamen Bereichs liegen, d. h. sich in unmittelbarer Nähe zueinander befinden. Dafür wird der gemeinsame Bereich insbesondere mit dem vorausfahrenden Fahrzeug 1 gedacht mitbewegt. Befindet sich das hintere Fahrzeug 3 innerhalb des Bereichs um das vorausfahrende Fahrzeug 1, erfolgt ab dann ein kontinuierliches Übermitteln S5 von Sensorinformationen vom vorausfahrenden Fahrzeug 1 an das hintere Fahrzeug 3, wobei die Sensorinformationen Daten über die Umgebung vorderhalb des vorausfahrenden Fahrzeugs 1 einschließlich eines in dieser Umgebung befindlichen weiteren Verkehrsteilnehmers 5 umfassen. Diese Sensorinformationen umfassen insbesondere Kameradaten des vorausfahrenden Fahrzeugs 1, welche eine Umgebung vorderhalb des vorausfahrenden Fahrzeugs 1 erfassen und somit den weiteren Verkehrsteilnehmer 5. Hierauf folgt das Analysieren S6 der übermittelten Sensorinformationen auf Aktivierung von Bremsleuchten des weiteren Verkehrsteilnehmers 5. Wenn diese als aktiviert erkannt werden und festgestellt wird, dass während der aktivierten Bremsleuchten des weiteren Verkehrsteilnehmers 5 die Bremsleuchten des vorausfahrenden Fahrzeugs 1 nicht aktiviert sind, erfolgt nur für diese Zeitdauer das Anzeigen einer zum vorausfahrenden Fahrzeug 1 ortsfesten Symbolik aktivierter Bremsleuchten für den Fahrer des hinteren Fahrzeugs 3 in augmentierter Realität.

Fig. 3 zeigt im Gegensatz zur Fig. 2, für welche das Verfahren nach Fig. 1 vollständig angewendet wird, eine Situation, in der zwischen dem hinteren Fahrzeug 3 und dem vorausfahrenden Fahrzeug 1 eine Lücke entstanden ist, und ein weiteres Fahrzeug im Begriff ist, in diese Lücke einzuscheren. Für das hintere Fahrzeug 3 besteht nun keine unmittelbare Notwendigkeit mehr, die Sensorinformationen des vorausfahrenden Fahrzeugs 1 über den weiteren Verkehrsteilnehmer 5 zu erhalten. Daher wird die kontinuierliche Übermittlung von Sensorinformationen vom vorausfahrenden Fahrzeug an das hintere Fahrzeug abgebrochen, wenn das weitere Fahrzeug in die Lücke einschert, oder bereits der Abstand zwischen dem vorausfahrenden Fahrzeug 1 und dem hinteren Fahrzeug 3 zu groß geworden ist.

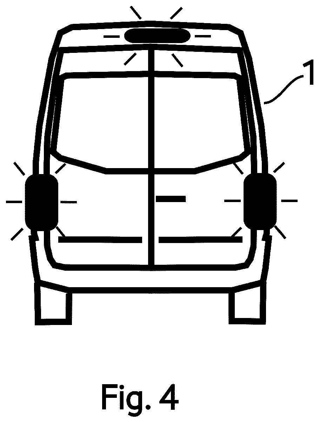

Fig. 4 zeigt aus Sicht eines Fahrers des hinteren Fahrzeugs 3 die augmentierte Sicht mit der Projektion eines Head-Up-Displays auf das vorausfahrende Fahrzeug 1. Das Head-Up-Display spielt für den Fahrer des hinteren Fahrzeugs 3 eine Symbolik ein, die Bremsleuchten symbolisiert. Entsprechend der Fähigkeit des Head-Up-Displays werden rot aufleuchtende Bremsleuchten virtuell überlagert über das vorausfahrende Fahrzeug 1 dargestellt, als wären dessen eigene Bremsleuchten aktiv. Tatsächlich wird jedoch die Symbolik dargestellt, während der weitere Verkehrsteilnehmer 5, welcher durch das vorausfahrende Fahrzeug 1 verdeckt wird, bremst, das vorausfahrende Fahrzeug 1 selbst jedoch nicht. Die virtuellen Bremsleuchten mit ihrer Beleuchtung werden dabei auf die Umfangsgeometrie des vorausfahrenden Fahrzeugs 1 so skaliert, als wären die Bremsleuchten des vorausfahrenden Fahrzeugs 1 selbst aktiv.

Obwohl die Erfindung im Detail durch bevorzugte Ausführungsbeispiele näher illustriert und erläutert wurde, ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann Änderungen vornehmen kann, ohne den Schutzbereich zu verlassen, der durch die Ansprüche definiert wird.

## Patentansprüche

1. Verfahren zum Anzeigen von Informationen für einen Fahrer eines hinteren Fahrzeugs (3) über eine Bremsung eines weiteren Verkehrsteilnehmers (5) vorderhalb eines unmittelbar vor dem hinteren Fahrzeug (3) vorausfahrenden Fahrzeugs (1), aufweisend die Schritte:
- Ermitteln (S1) eines Zulassungs-Kennzeichens des vorausfahrenden Fahrzeugs (1) durch das hintere Fahrzeug (3),
- Abgleich (S2) des ermittelten Zulassungs-Kennzeichens des vorausfahrenden Fahrzeugs (1) mit einer zentralen Datenbank (7) auf eine vorab-Registrierung, und wenn eine solche vorab-Registrierung festgestellt wird:
- Senden (S3) einer Anfrage zum Erhalt einer absoluten Position des vorausfahrenden Fahrzeugs (1) durch das hintere Fahrzeug (3); und
- Prüfen (S4) nach Erhalt der absoluten Position des vorausfahrenden Fahrzeugs (1), ob die absolute Position des vorausfahrenden Fahrzeugs (1) und eine absolute Position des hinteren Fahrzeugs (3) innerhalb eines vorgegebenen gemeinsamen Bereichs liegen, und wenn dies als vorliegend festgestellt wird:
- kontinuierliches Übermitteln (S5) von Sensorinformationen vom vorausfahrenden Fahrzeug (1) an das hintere Fahrzeug (3), wobei die Sensorinformationen Daten über die Umgebung vorderhalb des vorausfahrenden Fahrzeugs (1) einschließlich eines in dieser Umgebung befindlichen weiteren Verkehrsteilnehmers (5) und dessen Leuchten umfassen; und
- Analysieren (S6) der übermittelten Sensorinformationen auf Aktivierung von Bremsleuchten des weiteren Verkehrsteilnehmers (5), und wenn diese als aktiviert erkannt werden und vom hinteren Fahrzeug (3) festgestellt wird, dass währenddessen die Bremsleuchten des vorausfahrenden Fahrzeugs (1) nicht aktiviert sind: Anzeigen einer zum vorausfahrenden Fahrzeug (1) ortsfesten Symbolik aktivierter Bremsleuchten für den Fahrer des hinteren Fahrzeugs (3) in augmentierter Realität.

2. Verfahren nach Anspruch 1,
wobei die Symbolik aktivierter Bremsleuchten auf einem Head-Up-Display des hinteren Fahrzeugs (3) visuell dargestellt wird.

3. Verfahren nach Anspruch 2,
wobei im hinteren Fahrzeug (3) eine Warnung ausgegeben wird, wenn der Fokus des Fahrers außerhalb des Head-Up-Displays liegt.

4. Verfahren nach einem der Ansprüche 1 bis 3,
wobei die Symbolik aktivierter Bremsleuchten ortsfest über Bremsleuchten des vorausfahrenden Fahrzeugs (1) überlagert dargestellt wird.

5. Verfahren nach Anspruch 4,
wobei die Symbolik aktivierter Bremsleuchten abhängig von relativen Orientierungswinkeln zwischen dem hinteren Fahrzeug (3) und dem vorausfahrenden Fahrzeug (1) räumlich verzerrt dargestellt wird.

6. Verfahren nach einem der Ansprüche 1 bis 3,
wobei die Symbolik aktivierter Bremsleuchten ortsfest zu einer Hinterseite des vorausfahrenden Fahrzeugs (1), jedoch mit den originalen geometrischen Verhältnissen der Bremsleuchten des vorausfahrenden Fahrzeugs, (1) dargestellt werden.

7. Verfahren nach einem der Ansprüche 1 bis 6,
wobei die Symbolik aktivierter Bremsleuchten invariante und vom Typ des weiteren Verkehrsteilnehmers (5) unabhängige Symbole aufweist.

8. Verfahren nach einem der Ansprüche 1 bis 6,
wobei die Symbolik aktivierter Bremsleuchten abhängig vom Typ des weiteren Verkehrsteilnehmers (5) gewählte Symbole aufweist.

9. Verfahren nach einem der vorhergehenden Ansprüche,
wobei die zentrale Datenbank (7) die Anfrage zum Erhalt der absoluten Position des vorausfahrenden Fahrzeugs (1) erhält, bei vorab-Registrierung des vorausfahrenden Fahrzeugs (1) die absolute Position des vorausfahrenden Fahrzeugs (1) und des hinteren Fahrzeugs (3) auf jeweiliges Liegen im vorgegebenen gemeinsamen Bereich relativ zueinander prüft und im positiven Fall eine Freigabe an das vorausfahrende Fahrzeug (1) erteilt, die Sensorinformationen an das hintere Fahrzeug (3) zu übermitteln.

10. Verfahren nach einem der vorhergehenden Ansprüche,
wobei das kontinuierliche Übermitteln von Sensorinformationen vom vorausfahrenden Fahrzeug (1) an das hintere Fahrzeug (3) gestoppt wird, wenn das hintere Fahrzeug (3) die Spur des vorausfahrenden Fahrzeugs (1) verlässt und/oder sich ein weiteres Fahrzeug zwischen das vorausfahrende Fahrzeug (1) und das hintere Fahrzeug (3) setzt, oder wenn ein Mindestabstand zwischen dem vorausfahrenden Fahrzeug (1) und dem hinteren Fahrzeug (3) überschritten wird.

## Claims

1. Method for displaying information for a driver of a rear vehicle (3) relating to a braking maneuver of another road user (5) in front of a preceding vehicle (1) immediately in front of the rear vehicle (3), comprising the steps of:
- determining (S1), by the rear vehicle (3), a registration marking of the preceding vehicle (1),
- comparing (S2) the determined registration marking of the preceding vehicle (1) with a central database (7) to determine if prior registration exists, and if such prior registration is detected:
- sending (S3), by the rear vehicle (3), a request to obtain an absolute position of the preceding vehicle (1); and
- checking (S4), after obtaining the absolute position of the preceding vehicle (1), whether the absolute position of the preceding vehicle (1) and an absolute position of the rear vehicle (3) are within a predetermined common area, and if this is determined to be the case:
- continuously transmitting (S5) sensor information from the preceding vehicle (1) to the rear vehicle (3), wherein the sensor information comprises data relating to the environment in front of the preceding vehicle (1), including another road user (5) located in this environment and its lights; and
- analyzing (S6) the transmitted sensor information to determine if brake lights of the other road user (5) are activated, and if these brake lights are recognized as being activated and the rear vehicle (3) determines that the brake lights of the preceding vehicle (1) are not activated at the same time: displaying a symbol set that indicates activated brake lights and is fixed with respect to the preceding vehicle (1) for the driver of the rear vehicle (3) in augmented reality.

2. Method according to claim 1,
wherein the symbol set indicating activated brake lights is visually displayed on a head-up display of the rear vehicle (3).

3. Method according to claim 2,
wherein a warning is issued in the rear vehicle (3) if the driver's focus is outside the head-up display.

4. Method according to any of claims 1 to 3,
wherein the symbol set indicating activated brake lights is displayed such that it is fixed and superimposed on brake lights of the preceding vehicle (1).

5. Method according to claim 4,
wherein the symbol set indicating activated brake lights is displayed such that it is spatially deformed depending on relative orientation angles between the rear vehicle (3) and the preceding vehicle (1).

6. Method according to any of claims 1 to 3,
wherein the symbol set indicating activated brake lights is shown such that it is fixed with respect to the rear of the preceding vehicle (1), but with the original geometric proportions of the brake lights of the preceding vehicle (1).

7. Method according to any of claims 1 to 6,
wherein the symbol set indicating activated brake lights comprises invariant symbols that are independent of the type of the other road user (5).

8. Method according to any of claims 1 to 6,
wherein the symbol set indicating activated brake lights comprises symbols selected depending on the type of the other road user (5).

9. Method according to any of the preceding claims,
wherein the central database (7) receives the request to obtain the absolute position of the preceding vehicle (1), checks, if prior registration of the preceding vehicle (1) exists, the absolute position of the preceding vehicle (1) and of the rear vehicle (3) to determine if they are both located in the predetermined common area relative to one another, and, if this is the case, allows the preceding vehicle (1) to transmit the sensor information to the rear vehicle (3).

10. Method according to any of the preceding claims,
wherein the continuous transmission of sensor information from the preceding vehicle (1) to the rear vehicle (3) is stopped when the rear vehicle (3) leaves the path of the preceding vehicle (1) and/or another vehicle positions itself between the preceding vehicle (1) and the rear vehicle (3), or when a minimum distance between the preceding vehicle (1) and the rear vehicle (3) is exceeded.

## Revendications

1. Procédé permettant l'affichage d'informations pour un conducteur d'un véhicule arrière (3) concernant un freinage d'un autre usager de la voie publique (5) se trouvant à l'avant d'un véhicule précédent (1) immédiatement devant le véhicule arrière (3), présentant les étapes consistant à :
- déterminer (S1), par le véhicule arrière (3), une plaque d'immatriculation du véhicule précédent (1),
- comparer (S2) la plaque d'immatriculation déterminée du véhicule précédent (1) avec une base de données centrale (7) à la recherche d'un préenregistrement et, si un tel préenregistrement est constaté :
- envoyer (S3), par le véhicule arrière (3), une demande pour l'obtention d'une position absolue du véhicule précédent (1) ; et
- vérifier (S4), après l'obtention de la position absolue du véhicule précédent (1), si la position absolue du véhicule précédent (1) et si une position absolue du véhicule arrière (3) se trouvent ou non à l'intérieur d'une plage commune prédéfinie et, s'il est constaté que tel est le cas :
- transmettre en continu (S5) des informations de capteur du véhicule précédent (1) au véhicule arrière (3), dans lequel les informations de capteur comprennent des données concernant l'environnement se trouvant à l'avant du véhicule précédent (1), y compris un autre usager de la voie publique (5) se trouvant dans ledit environnement et ses feux ; et
- analyser (S6) les informations de capteur transmises à la recherche d'une activation des feux de stop de l'autre usager de la voie publique (5) et, lorsque ceux-ci sont détectés comme étant activés et que le véhicule arrière (3) constate que les feux de stop du véhicule précédent (1) ne sont pas activés pendant ce temps : afficher en réalité augmentée pour le conducteur du véhicule arrière (3) une symbolique fixe de feux de stop activés par rapport au véhicule précédent (1).

2. Procédé selon la revendication 1,
dans lequel la symbolique de feux de stop activés est représentée visuellement sur un affichage tête haute du véhicule arrière (3).

3. Procédé selon la revendication 2,
dans lequel, dans le véhicule arrière (3), un avertissement est émis lorsque le foyer du conducteur se trouve en dehors de l'affichage tête haute.

4. Procédé selon l'une des revendications 1 à 3,
dans lequel la symbolique de feux de stop activés est représentée de manière fixe en superposition sur des feux de stop du véhicule précédent (1).

5. Procédé selon la revendication 4,
dans lequel la symbolique de feux de stop activés est représentée de manière déformée dans l'espace en fonction d'angles d'orientation relatifs entre le véhicule arrière (3) et le véhicule précédent (1).

6. Procédé selon l'une des revendications 1 à 3,
dans lequel la symbolique de feux de stop activés est représentée de manière fixe par rapport à un côté arrière du véhicule précédent (1), mais avec les rapports géométriques originaux des feux de stop du véhicule précédent (1).

7. Procédé selon l'une des revendications 1 à 6,
dans lequel la symbolique des feux de stop activés présente des symboles invariants et indépendants du type de l'autre usager de la voie publique (5).

8. Procédé selon l'une des revendications 1 à 6,
dans lequel la symbolique des feux de stop activés présente des symboles choisis en fonction du type de l'autre usager de la voie publique (5).

9. Procédé selon l'une des revendications précédentes,
dans lequel la base de données centrale (7) reçoit la demande pour l'obtention de la position absolue du véhicule précédent (1), vérifie, en cas de préenregistrement du véhicule précédent (1), la position absolue du véhicule précédent (1) et du véhicule arrière (3) l'une par rapport à l'autre pour savoir s'ils se trouvent respectivement à l'intérieur de la plage commune prédéfinie et, en cas de réponse positive, donne une autorisation au véhicule précédent (1) de transmettre les informations de capteur au véhicule arrière (3).

10. Procédé selon l'une des revendications précédentes,
dans lequel la transmission continue d'informations de capteur du véhicule précédent (1) au véhicule arrière (3) est arrêtée lorsque le véhicule arrière (3) quitte la voie du véhicule précédent (1) et/ou lorsqu'un autre véhicule s'interpose entre le véhicule précédent (1) et le véhicule arrière (3), ou lorsqu'une distance minimale entre le véhicule précédent (1) et le véhicule arrière (3) est dépassée.
